# EUROPÄISCHE PATENTANMELDUNG

(11) **EP 0 617 882 A1**
(43) Veröffentlichungstag der Anmeldung: **05.10.1994**
(21) Anmeldenummer: 94103410.0
(22) Anmeldetag: 07.03.1994
(51) Int. Cl.: A01B 71/06

(54) **Vorrichtung zum Ankuppeln landwirtschaftlicher, verfahrbarer Anbaumaschinen an Schlepper**

(30) Priorität: 01.04.1993 DE 4310742
(71) Anmelder: Aigner, Rupert, D-84431 Rattenkirchen (DE)
(72) Erfinder: Aigner, Rupert, D-84431 Rattenkirchen (DE)
(74) Vertreter: Seidel, Herta, Dipl.-Phys.

(57) **Zusammenfassung**

Eine Vorrichtung zum Ankoppeln von verfahrbaren landwirtschaftlichen Anbaumaschinen mit Zapfwellenantrieb an einen Schlepper, umfaßt einen mit der Zapfwelle des Schleppers verbindbaren Kupplungsteil (14,15), der in einem Kupplungsgehäuse (12), das an dem an der Kraftheberanlage des Schleppers befindlichen Gestänge (1,1a,1b) angeordnet ist, gelagert und über ein Hebelgestänge (5,9,11,13) in Abhängigkeit von der Stellung einer Sperrvorrichtung (4) zwischen Schlepper und Anbaumaschine verschiebbar ist.

## Beschreibung

Die Erfindung betrifft eine Vorrichtung zum Ankuppeln von verfahrbaren Anbaumaschinen mit Zapfwellenantrieb an einen Schlepper, wobei die Anbaumaschine und die Kraftheberanlage des Schleppers mittels beidseitig vorgesehenen Gestängen mechanisch miteinander verbindbar und mittels einer am Gestänge des Schleppers vorgesehenen Sperrvorrichtung zu sichern und die Wellen von Anbaumaschine und Schlepper mittels einer Kupplung zu verbinden sind.

Um in herkömmlicher Weise verfahrbare Anbaumaschinen mit Zapfwellenantrieb mit einem Schlepper zu verbinden, mußte man ein an der Kraftheberanlage des Schleppers angeordnetes Gestänge durch Betätigen des Krafthebers mit dem an der Anbaumaschine vorgesehenen Gestänge mechanisch vereinigen und mittels eines Sperrhakens sichern.

Für die Übertragung der Drehbewegung der Schlepperzapfwelle auf die Antriebswelle der Anbaumaschine war es aber erforderlich, daß die Bedienungsperson die Fahrerkabine verließ, um von Hand eine Gelenkwelle mit der Zapfwelle des Schleppers einerseits und der Antriebswelle der Anbaumaschine andererseits zu verbinden. Entsprechend mußte nach Beendigung der Arbeit vor mechanischer Trennung der Verbindungsgestänge von Schlepper und Anbaumaschine,die von der Fahrerkabine aus durch Absenken des Krafthebers des Schleppers bewirkt werden konnte, erst die Gelenkwellenverbindung beider Geräte von Hand wieder gelöst werden. Dieses Vorgehen ist nicht nur umständlich, sondern auch zeitraubend, da die Bedienungsperson ihre Tätigkeit in der Fahrerkabine unterbrechen muß, um die Gelenkwelle sowohl anzubringen als auch wieder zu lösen. Darüber hinaus ist das Mitführen getrennter Teile für den Zusammenbau vor Ort stets als unvorteilhaft für einen zügigen Arbeitsablauf zu bewerten.

Der Erfindung liegt daher die Aufgabe zugrunde, eine Vorrichtung zu schaffen, die es ermöglicht, auch die Kupplung von Zapfwelle des Schleppers und Antriebswelle der Anbaumaschine zur Übertragung der Drehbewegung vom Schlepper auf die Anbaumaschine automatisch vornehmen zu können. Das heißt mit anderen Worten, es soll die Aufgabe gelöst werden, daß die Bedienungsperson die Fahrerkabine beim Ankuppeln von Schlepper und Anbaumaschine nicht mehr verlassen und auch keine losen Bauteile mitführen muß.

Erfindungsgemäß wird dies dadurch erreicht, daß der mit der Zapfwelle des Schleppers verbindbare Kupplungsteil in einem Kupplungsgehäuse, das an dem an der Kraftheberanlage befindlichen Gestänge angeordnet ist, gelagert und über ein Hebelgestänge in Abhängigkeit von der Stellung der Sperrvorrichtung des Gestänges verschiebbar ist.

Durch die erfindungsgemäße funktionelle Koppelung von Sperrvorrichtung und Zapfwellenkupplung läßt es sich erreichen, daß durch die jeweilige Stellung der Sperrvorrichtung, die sich entweder durch automatisches Einrasten der Sperrvorrichtung in das Gestänge der Anbaumaschine oder durch Betätigung der Sperrvorrichtung durch die in der Fahrerkabine befindliche Bedienungspersonen ergibt, in reproduzierbarer Weise eine Stellung der Zapfwellenkupplung in deren Kupplungsgehäuse bedingt wird, dergestalt, daß beim Einrasten der Sperrvorrichtung auch ein Einrasten der Kupplungsteile der der Antriebswelle der Anbaumaschine und des Zapfwellenantriebes des Schleppers ineinander erfolgt, während eine Lösung der Sperrvorrichtung der Anbaumaschine entsprechend ein Entkoppeln der genannten Zapfwellenkupplungsteile zur Folge hat.

Vorzugsweise erfolgt die funktionelle Verbindung von Sperrvorrichtung und Zapfwellenkupplung durch ein Hebelgestänge, das einen ersten Winkelhebel umfaßt, dessen einer Hebelarm als Schaltgabel für das verschiebbare Kupplungsteil dient, wobei der Winkelhebel mit einer in seinem Scheitel verlaufenden, am Kupplungsgehäuse befestigten Welle mittels einer an seinem anderen Hebelarm angelenkten Betätigungsstange verschwenkbar ist, die ihrerseits gelenkig an einem Bedienungshebel der Sperrvorrichtung befestigt ist.

Bei bisher bekannten Vorrichtungen ist die Sperrvorrichtung als ein Winkelhebel mit einem hakenförmigen Fortsatz an seinem einen Hebelarm ausgebildet, der mit einer in seinem Scheitel verlaufenden, am Gestänge des Schleppers befestigten Welle mit Hilfe eines als Bedienungshebel dienenden anderen Hebelarmes schwenkbar ist. Die Verschwenkung dieses Winkelhebels tritt einmal dann ein, wenn die Sperrvorrichtung in das an der Anbaumaschine angeordnete Gestänge einrastet, zum anderen kann die Bedienungsperson von der Fahrkabine aus über ein Betätigungsseil ein Verschwenken des Winkelhebels im Sinne einer Lösung der Sperrvorrichtung aus dem Gestänge der Anbaumaschine bewirken.

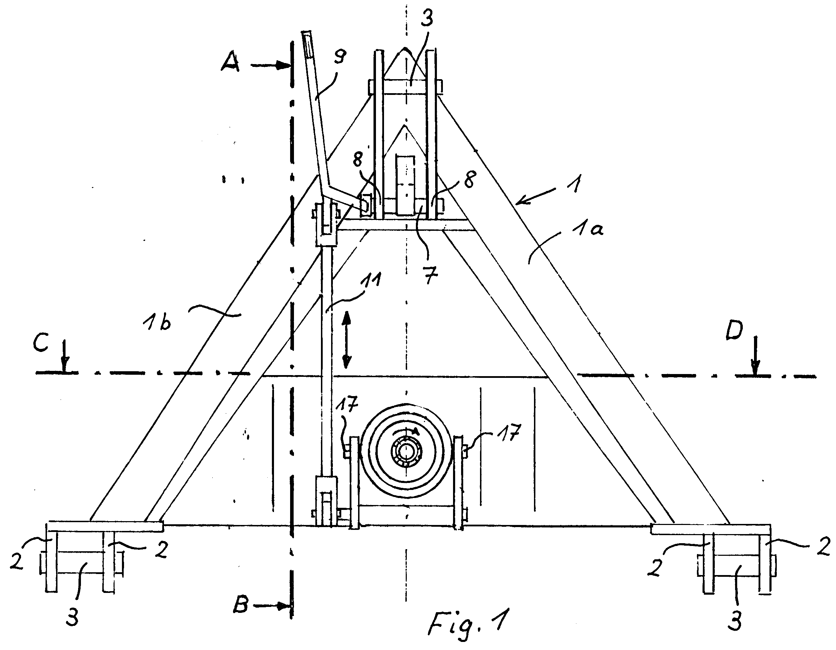

Um aber bei der erfindungsgemäßen Vorrichtung sowohl die Sperrvorrichtung als auch die Kupplungsteile für die Getriebewellen sicher in Eingriff zu bringen und in dieser Lage während des gesamten Arbeitsvorganges zu halten und zu sichern, ist vorzugsweise eine Rückstellfeder vorgesehen, die einerseits an dem mit der Stange verbundenen Hebelarm des ersten Winkelhebels und andererseits an dem mit dem Schlepper verbundenen Gestänge befestigt ist. Durch die von der Rückstellfeder auf den ersten Winkelhebel ausgeübte Zugkraft wird einerseits über die Schaltgabel die Kupplung in dem Kupplungsgehäuse verschoben und in Eingriffstellung gedrückt und gleichzeitig auch die Betätigungsstange in Richtung nach oben bewegt, daß heißt es wird hierdurch eine Schwenkung des Bedienungshebels veranlaßt, durch die der hakenförmige Fortsatz der Sperrvorrichtung in Eingriffstellung mit dem Gestänge der Anbaumaschine gedrängt und dort gehalten wird. Der vor dem Einrasten der Sperrvorrichtung in das Gestänge der Anbaumaschine zurückgedrängte Sperrhaken bewirkt über das Betätigungsgestänge auch ein Zurückschieben der Kupplung im Lagergehäuse. Der Kupplungsvorgang erfolgt also erst dann, wenn auch die Sperrvorrichtung in das Gestänge der Anbaumaschine einrastet. Weitere konstruktive Einzelheiten sowie deren Funktion ergeben sich aus der nachstehenden Beschreibung eines Ausführungsbeispieles anhand der Zeichnung. Hierin zeigen
- Fig. 1: eine Ansicht des mit einer nicht dargestellten Kraftheberanlage eines Schleppers verbindbaren Gestänges mit dem Kupplungsgehäuse der Kupplung sowie dem Verbindungsgestänge zwischen Kupplung und Sperrvorrichtung,
- Fig. 2: eine Seitenansicht der erfindungsgemäßen Vorrichtung im Schnitt längs der Schnittlinie A...B und

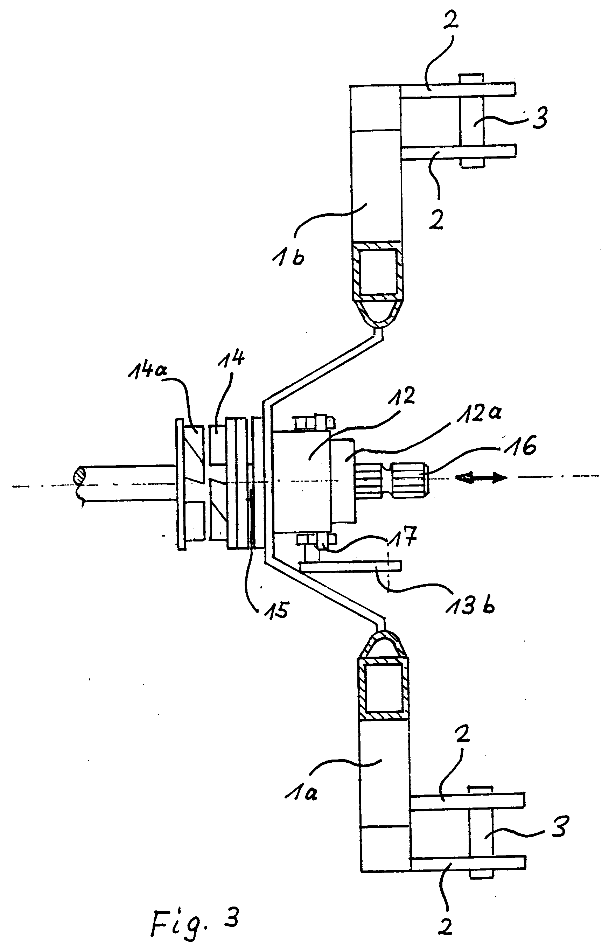

- Fig. 3: ein Schnittbild der in Fig. 1 gezeigten Vorrichtung längs der Linie C.....D.

Die in den Figuren gezeigten übereinstimmenden Teile sind jeweils mit übereinstimmenden Bezugszeichen gekennzeichnet.

Ein sogenanntes Schnellkuppeldreieck 1, das herkömmlicherweise zum Anbau verschiedener verfahrbarer Anbaumaschinen - es handelt sich hier um Mähwerke, Kreiselschwader und dergleichen, also um Geräte,die an einen Schlepper angehängt werden und bei denen eine Drehbewegung vom Getriebe direkt abgenommen wird - an den Kraftheber eines Traktors verwendet wird, wird über beidseitig vorgesehene plattenförmige Arme 2 mittels Bolzen 3 an dem Kraftheber des Traktors befestigt.

Ein dreieckförmiges Gestänge entsprechender Abmessungen, gebildet aus U-Profilen befindet sich an den Anbaumaschinen. Beim Anheben des Schnellkuppeldreiecks 1 mittels des Krafthebers des Traktors fahren dessen Schenkel 1a und 1b in die U-Profile des Gestänges der Anbaumaschine ein. Die Schenkel der U-Profile umgreifen dabei die Schenkel 1 a und 1b des Schnellkuppeldreieckes 1. Eine zwischen den U-Profilen verlaufende Platte weist im Scheitelbereich der U-Profile eine Öffnung auf, in die ein Sperrhaken 4 eingreift, der am Schnellkuppeldreieck 1, und zwar in dessen oberem Bereich vorgesehen ist. Dieser Sperrhaken 4 verhindert ein unerwünschtes Lösen der beiden Gestänge, während des Arbeitseinsatzes.

Der Sperrhaken 4 ist als ein Winkelhebel 5 mit einem hakenförmigen Fortsatz 4 ausgebildet. Der Winkelhebel 5 sitzt mit seinem Scheitel 6 fest auf einer Welle 7 , die im oberen Eckbereich des Dreiecks 1 bei 8 drehbar gelagert ist. Ein Hebelarm 9 des Winkelhebels 5 ist als ein abgewinkelt ausgebildeter Bedienungsarm ausgebildet und an seinem freien Ende mit einem Betätigungsseil 10 verbunden, das zur Fahrerkabine führt.

An dem Bedienungsarm 9 ist ferner eine Betätigungsstange 11 angelenkt, die zu einem in einem Kupplungsgehäuse 12 schwenkbar angeordneten Winkelhebel 13 führt, der als Schalthebel für ein Kupplungsteil 14 dient, das hier als Klauenkupplung ausgebildet ist und mit einer an der Anbaumaschine vorgesehenen Gegenkupplung 14a in Eingriff zu bringen ist.

Das Kupplungsgehäuse 12 befindet sich im unteren Teil des Schnellkuppeldreiecks 1. In diesem ist das Lagergehäuse 12a für die Kupplungswelle 15 verschiebbar.Die Kupplungswelle 15 trägt an ihrem einen Ende die Klauenkupplung 14 und an ihrem anderen Ende die zum Zapfwellenantrieb des Schleppers führende Zapfwelle 16. Zwei am verschiebbarenLagergehäuse 12a angeordnete Stifte 17 ragen durch je einen Schlitz 18 im Kupplungsgehäuse 12 nach außen und werden von den gabelförmig ausgebildeten Enden der Hebelarme 13a eines Winkelhebels 13 umgriffen.

Der Winkelhebel 13 ist mit einer durch seinen Scheitel ragenden Welle 19 fest verbunden, die ihrerseits drehbar im Kupplungsgehäuse 12 gelagert ist. Mit dem Ende des anderen Hebelarmes 13b ist die Betätigungsstange 11, die gelenkig am Bedienungsarm 9 der Sperrvorrichtung 4 befestigt ist, ebenfalls gelenkig verbunden. Hierdurch bewirkt eine Schwenkbewegung des Bedienungsarmes 9 der Sperrvorrichtung 4 eine Schwenkbewegung des Winkelhebels 13 um seine Welle 19 und damit eine Verschiebung der Stifte 17, also eine Verschiebung der Kupplungswelle 15 zusammen mit dem Lägergehäuse 12a im Kupplungsgehäuse 12.

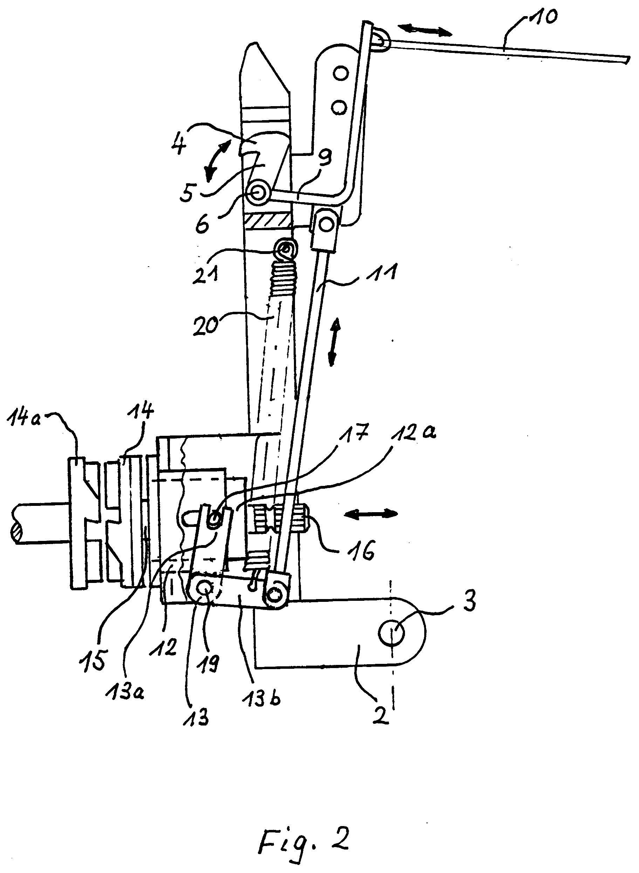

Eine Rückstellfeder 20 ist einerseits am Schnellkuppeldreieck 1 bei 21 angehängt und andererseits mit dem Hebelarm 13b des Winkelhebels 13 verbunden. Infolge der durch die Feder ausgeübten Zugkraft auf den Winkelhebel 13 wird bewirkt, daß einerseits der Stift 17 die Kupplungswelle 15 in Eingriffsstellung verschiebt, das heißt, die Klauenkupplung 14 rückt ein und wird in dieser Stellung durch die Federkraft gesichert. Andererseits wird über die Betätigungsstange 11 der Bedienungsarm 9 des Winkelhebels 5 zu einer Schwenkbewegung gegen den Uhrzeigersinn veranlaßt. Dies führt dazu, daß der Sperrhaken 4 durch die Öffnung im Gestänge der Anbaumaschine gedrückt und auch dort so lange gehalten wird, bis die Bedienungsperson durch Betätigung des Betätigungsseiles 10 eine Lösung der Verriegelung bewirkt. Durch den Seilzug erfolgt eine Schwenkbewegung des Sperrhakens 4 im Uhrzeigersinn und außerdem über die Betätigungsstange 11 eine Schwenkbewegung des Winkelhebels 13 im Uhrzeigersinn. Letzteres hat zur Folge, daß der Hebelarm 13a des Winkelhebels 13 den Stift 17 in der Zeichnung nach rechts bewegt und damit die Kupplung 14 aus ihrem Eingriff mit dem Gegenkupplungsteil 14a der Anbaumaschine rückt. Diese Stellung der Kupplungsvorrichtung ist in Fig. 2 dargestellt.

Die Kupplungsvorgänge erfolgen somit vollautomatisch. Die Bedienungsperson braucht den Führerstand nicht mehr zu verlassen. Es ist durch die konstruktive Ausgestaltung der Kupplungsvorrichtung gewährleistet, daß sowohl die mechanische Verbindung zwischen Schlepper und Anbaumaschine als auch die Übertragung der Drehbewegung vom Zapfwellenantrieb des Schleppers auf die Getriebewelle der Anbaumaschine in zufriedenstellender Weise bewirkt wird. Es versteht sich von selbst daß der Abstand zwischen der Sperrvorrichtung 4 und der Kupplungswelle bzw. der Anbringung des Kupplungsgehäuses 12 auf dem Schnellkupplungsdreieck 1 so gewählt werden muß, daß die Öffnung im Anbaugestänge der Anbaumaschine und die Getriebewelle der Anbaumaschine, die das Gegenkupplungsstück 14a trägt, abstandsmäßig übereinstimmen. Um die Vorrichtung universell verwendbar zu gestalten, ist es sinnvoll, eine längenverstellbare Betätigungsstange 11 zu verwenden, um die Möglichkeit zu haben, den Abstand von Sperrvorrichtung 4 und Lagergehäuse 12a auf dem Schnellkupplungsdreieck 1 den Gegebenheiten der Anbaumaschine anzupassen.

Die erfindungsgemäße Kupplungsvorrichtung läßt sich daher für alle Anbaumaschinen verwenden, bei denen eine Drehbewegung vom Getriebe des Schleppers direkt abgenommen werden kann.

Die vorgelegten Patentansprüche stellen einen ersten Versuch des Anmelders dar, sein Schutzbegehren zum Ausdruck zu bringen. Der Anmelder behält sich aber vor, im Laufe des Prüfungsverfahrens dieses Schutzbegehren abzuwandeln unter Heranziehung der in der Beschreibung des Anmeldungsgegenstandes offenbarten Merkmale.

## Patentansprüche

1. Vorrichtung zum Ankuppeln von verfahrbaren Anbaumaschinen mit Zapfwellenantrieb an einen Schlepper, wobei die Anbaumaschine und die Kraftheberanlage des Schleppers mittels beidseitig vorgesehenen Gestängen mechanisch miteinander verbindbar und mittels einer am Gestänge des Schleppers vorgesehenen Sperrvorrichtung zu sichern und die Wellen von Anbaumaschine und Schlepper mittels einer Kupplung zu verbinden sind, **dadurch gekennzeichnet**, daß der mit der Zapfwelle des Schleppers verbindbare Kupplungsteil (14, 15) in einem Kupplungsgehäuse (12), das an dem an der Kraftheberanlage befindlichen Gestänge (1,1a,1b) angeordnet ist, gelagert und über ein Hebelgestänge (5,9,11,13) in Abhängigkeit von der Stellung der Sperrvorrichtung (4) des Gestänges verschiebbar ist.

2. Vorrichtung nach Anspruch 1, **dadurch gekennzeichnet**, daß das Hebelgestänge einen ersten Winkelhebel (13) umfaßt, dessen einer Hebelarm (13a) als Schaltgabel für das verschiebbare Kupplungsteil (14, 15) dient, daß der Winkelhebel (13) mit einer in seinem Scheitel verlaufenden, am Kupplungshäuse (12) befestigten Welle (19) mittels einer an seinem anderen Hebelarm (13b) angelenkten Betätigungsstange (11) verschwenkbar ist, die ihrerseits gelenkig an einem Bedienungshebel (9) der Sperrvorrichtung (4) befestigt ist.

3. Vorrichtung nach Anspruch 1 oder 2, **dadurch gekennzeichnet**, daß die Sperrvorrichtung (4) als ein zweiter Winkelhebel (5,9) mit einem hakenförmigen Fortsatz (4) an seinem einen Hebelarm (5) ausgebildet ist, der mit einer in seinem Scheitel verlaufenden, am Gestänge befestigten Welle (6) mittels des als Bedienungshebel dienenden anderen Hebelarms (9) schwenkbar ist.

4. Vorrichtung nach einem der Ansprüche 1 bis 2, **dadurch gekennzeichnet**, daß eine Rückstellfeder (20) vorgesehen ist, die einerseits an dem mit der Stange (11) verbundenen Hebelarm (13b) des ersten Winkelhebels (13) und andererseits am Schleppergestänge (1) befestigt ist, und dazu dient, bei der Verbindung der Gestänge von Schlepper und Anbaumaschine den hakenförmigen Fortsatz (4) der Sperrvorrichtung sowie die Kupplungsteile (14,14a) von Schlepper und Anbaumaschine in Eingriffstellung zu bringen und in dieser Lage während des Arbeitsvorganges zu halten und zu sichern.

5. Vorrichtung nach einem der vorhergehenden Ansprüche, **dadurch gekennzeichnet**, daß die Lösung der Sperrvorrichtung mit Hilfe einer durch eine Bedienungsperson auszuübenden Schwenkbewegung des Bedienungshebels (9) der Sperrvorrichtung erfolgt, wobei die Schwenkbewegung des Bedienungshebels über die Betätigungsstange (11) auf den ersten Winkelhebel (13) übertragen wird und durch diesen die Lösung der Kupplungsteile (14,14a) veranlaßt.

6. Vorrichtung nach Anspruch 5, **dadurch gekennzeichnet**, daß die Schwenkbewegung des Bedienungshebels (9) mit Hilfe eines zur Fahrerkabine führenden Zugseils (10) oder mittels eines in der Fahrerkabine betätigbaren Elektromagneten erfolgt.
